**Europäisches Patentamt**

**European Patent Office**

**Office européen des brevets**

(19)

(11) Veröffentlichungsnummer : **0 414 147 B1**

(12) # EUROPÄISCHE PATENTSCHRIFT

(45) Veröffentlichungstag der Patentschrift :
**19.10.94 Patentblatt 94/42**

(21) Anmeldenummer : **90115793.3**

(22) Anmeldetag : **17.08.90**

(30) Priorität : **21.08.89 DE 3927559**

(43) Veröffentlichungstag der Anmeldung :
**27.02.91 Patentblatt 91/09**

(45) Bekanntmachung des Hinweises auf die
Patenterteilung :
**19.10.94 Patentblatt 94/42**

(84) Benannte Vertragsstaaten :
**DE FR GB IT**

(51) Int. Cl.⁵ : **H02P 7/00, H02P 7/62**

(56) Entgegenhaltungen :
**DE-A- 2 718 722**

(73) Patentinhaber : **SIEMENS**
**AKTIENGESELLSCHAFT**
**Wittelsbacherplatz 2**
**D-80333 München (DE)**

(72) Erfinder : **Aidam, Eckhard**
**Ulmenstrasse 7**
**D-6729 Jockgrim (DE)**
Erfinder : **Weinel, Johann**
**Bärenweg 26**
**D-7500 Karlsruhe 21 (DE)**

(54) **Schaltungsanordnung zur Steuerung der Umdrehungsgeschwindigkeit von Zweiphasen-Induktionsmotoren.**

## Beschreibung

Die Erfindung betrifft eine Schaltungsanordnung zur Steuerung der Umdrehungsgeschwindigkeit von Zweiphasen-Induktionsmotoren, deren Ständerwicklungen mit um 90° phasenverschobenen Wechselströmen veränderbarer Frequenz gespeist werden.

Derartige Motoren finden insbesondere als Kleinmotoren mit zylindrischem oder scheibenförmigem Läufer Verwendung in Antrieben, z. B. in Meßgeräten, in denen es auf die Einhaltung einer konstanten Drehzahl bzw. Steuerung auf unterschiedliche Drehzahlen für Stellzwecke ankommt.

Es ist bekannt, die Steuerung oder Regelung der Umdrehungsgeschwindigkeit durch Änderung der Phasenlage vorzunehmen. Ungünstig ist dabei, daß zur schnellen Ausregelung einer positiven Regelabweichung eine Phasenumkehr bzw. eine Umpolung eines der Erregerströme notwendig ist. Weiter ist es aus dem Patentdokument DE-A-27 18 722 bekannt, die Drehzahl von Induktionsmotoren durch Ändern der Amplituden der beiden um 90° phasenverschobenen Speisespannungen zu steuern oder zu regeln. Dabei ist nachteilig, daß mit sinkender Spannung auch das Drehmoment abnimmt. Im Bremsbetrieb werden in die Motorwicklungen Gleichströme eingespeist.

Es ist auch bekannt, die Umdrehungsgeschwindigkeit über die veränderbare Frequenz der Speisewechselströme zu beeinflussen, wie es z. B. von T. Mazur in der GB-Z "Electrical Equipment" Vol. 14, no. 10, p. 35, 37, 39 u. a. beschrieben ist. Der Schaltungsaufwand bei diesem mit Netzwechselstrom betriebenen Induktionsmotor in der Leistungsklasse von einigen Hundert Watt ist jedoch relativ groß.

Es besteht die Aufgabe, eine Schaltungsanordnung anzugeben, mit welcher die Umdrehungsgeschwindigkeit bei Steuer- oder Regeleingriffen sich möglischt schnell einstellt und eine hohe Drehzahlkonstanz erreicht wird.

In Anspruch 1 ist eine Schaltungsanordnung zur Lösung dieser Aufgabe angegeben.

Eine Ausgestaltung der erfindungsgemäßen Schaltungsanordnung ist Gegenstand des Anspruchs 2.

Infolge des drehzahlstabilisierenden Wechsels von Antriebs- und Bremszeiten wird mit der neuen Anordnung erreicht, daß die Reaktion auf Steuer- oder Stellbefehle erheblich schneller erfolgt als bei den bekannten Verfahren. Dies ist besonders von Vorteil beim Ausregeln von Regelabweichungen bei konstante Drehzahl verlangenden Antrieben der Meß-, Steuer- und Regelungstechnik, z. B. beim Antrieb von rotierenden Blenden.

Zur Erläuterung der Erfindung sind in den Figuren 1 bis 6 Schaltungsanordnungen, Stromverlaufskurven und Kennlinien dargestellt und im folgenden beschrieben.

Es zeigen

Figur 1  die schematische Darstellung einer erfindungsgemäßen Schaltungsanordnung
Figur 2  die Ausführung eines Indudktionsmotors als Ferraris-Motor mit Scheibenläufer,
Figuren 3 und 4  Stromverlaufsdiagramme bei zwei verschiedenen Speisefrequenzen,
Figur 5  eine entsprechende Motorkennlinie und
Figur 6  eine Schaltungsanordnung zur Verwendung an Gleichstromquellen, insbesondere für mobilen Einsatz.

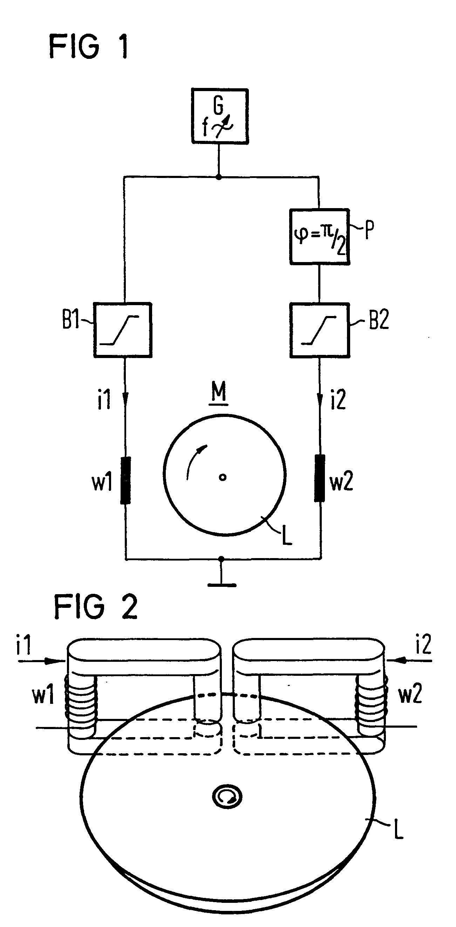

Figur 1 zeigt schematisch einen Zweiphasen-Induktionsmotor M mit einem scheiben- oder glockenförmigen Läufer L aus magnetischem oder nichtmagnetischem Material und den zugehörigen Ständerwicklungen w1 und w2. Zur Speisung der Ständerwicklungen ist ein Wechselstromgenerator G mit einstellbarer Frequenz f vorgesehen. Er speist über einen ersten Strombegrenzer B1 die Wicklung w1 mit dem Strom i1 und die Ständerwicklung w2 über einen zweiten Strombegrenzer B2 mit dem Wechselstrom i2. Dem Strombegrenzer B2 ist ein Phasenschieber P vorgeschaltet, der den vom Wechselstromgenerator G gelieferten Strom um einen Phasenwinkel $\varphi = \frac{\pi}{2}$ gegenüber dem in dem anderen Zweig fließenden Strom i1 verschiebt. Die Umdrehungsgeschwindigkeit des Läufers L wird durch Ändern der Speisefrequenz f im Wechselstromgenerator G eingestellt.

Eine mögliche Ausführung des in Figur 1 schematisch dargestellten Induktionsmotors zeigt Figur 2 (Ferraris-Motor mit Scheibenläufer).

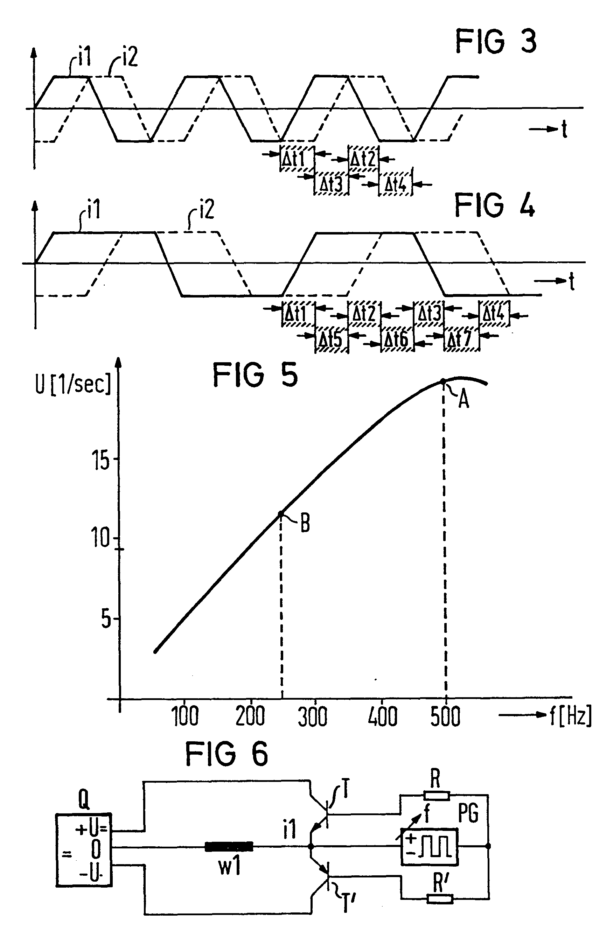

In Figur 3 ist der Stromverlauf der Speisewechselströme i1 und i2 bei maximaler Speisefrequenz über der Zeit dargestellt. Während der Zeitabschnitte $\Delta t1$ und $\Delta t2$ induziert die durch den Speisestrom i1 in der Wicklung w1 hervorgerufene Flußänderung Ringströme im Läufer L, die im jeweils zu diesen Zeiten konstanten Feld der Wicklung w2 eine Kraft erfahren. Mit gewechselten Feldern geschieht das gleiche zu den Zeiten $\Delta t3$ und $\Delta t4$. Die Wirkungsrichtung der Kraft bleibt wegen der vertauschten Polaritäten stets gleich.

Bei verringerter Speisefrequenz wird, wie Figur 4 zeigt, der Antrieb während der Zeitabschnitte $\Delta t5$, $\Delta t6$ und $\Delta t7$ ausgesetzt, da hier keine magnetische Flußänderung auftritt. Zu diesen Zeitabschnitten sind die Speiseströme und damit die Flußstärken in beiden Ständerwicklungen w1 und w2 konstant, so daß in dem Läufer eine Bremswirkung entsteht. Antriebsdrehmoment und Bremsdrehmoment wechseln sich ab. Mit abnehmen-

2

der Speisefrequenz überwiegt immer mehr die antriebslose Zeit mit Bremseffekt und entsprechend erniedrigter Umdrehungsgeschwindigkeit.

Dies geht aus Figur 5 hervor, wo eine Motorkennlinie über der Speisefrequenz f mit der zugeordneten Umdrehungsgeschwindigkeit in der Ordinate dargestellt ist. Der Punkt A mit der maximalen Umdrehungsgeschwindigkeit entspricht dem in Figur 3 dargestellten Stromverlauf, der Punkt B dem Stromverlauf nach Figur 4. Man erkennt, daß sich über Änderung der Speisefrequenz des Motors dessen Umdrehungsgeschwindigkeit in nahezu linearer Abhängigkeit auf einfache Weise ändern läßt.

Figur 6 zeigt ein Ausführungsbeispiel für einen aus einer Gleichstromquelle gespeisten Wechselstromgenerator mit Strombegrenzer. Der Übersichtlichkeit halber ist dies nur für die Speisung der Ständerwicklung w1 dargestellt. Entsprechend wird die Ständerwicklung w2 mit einem um 90° phasenverschobenen Strom gespeist.

Der Pluspol und der Minuspol einer Gleichspannungsquelle Q, beispielsweise einer Batterie oder eines Netzteils mit niedriger Ausgangsspannung, ist jeweils über einen Schalttransistor T bzw. T' an ein Ende der Ständerwicklung w1 gelegt. Zur Erzeugung des Speisewechselstroms ist ein Rechteckimpulsgeber PG mit einstellbarer Impulsfrequenz f vorgesehen, dessen Impulse wechselweise die Schalttransistoren T und T' über deren Basen auf- und zusteuern und somit die Ständerwicklung w1 einen Wechselstrom i1 zuführen. Als Strombegrenzer wirken die in die Basisleitungen der Transistoren T, T' geschalteten gleichartigen Widerstände R und R', die bei durchgängigen Kollektor-Emitter-Strecken der Transistoren T, T' den dort fließenden Strom begrenzen, so daß ein Stromverlauf entsteht, wie er in den Figuren 3 und 4 dargestellt ist.

## Patentansprüche

1. Schaltungsanordnung zur Steuerung der Umdrehungsgeschwindigkeit von Zweiphasen-Induktionsmotoren, deren Ständerwicklungen (W1, W2) mit zwei um 90° gegeneinander phasenverschobenen Wechselströmen (i1, i2) veränderbarer Frequenz gespeist sind, mit einer Einrichtung (G, P) zum Erzeugen der beiden Wechselströme, **dadurch gekennzeichnet**, daß an die Einrichtung (G, P) zum Erzeugen der Wechselströme zwei Strombegrenzer (B1, B2) angeschlossen sind, über welche die beiden Wechselströme (i1, i2) den Ständerwicklungen (W1, W2) zugeführt sind, wobei die Strombegrenzer eine Begrenzung der Amplituden der speisenden Wechselströme derart bewirken, daß trapezförmige Motorströme erzeugt werden und die auf eine konstante Stromstärke begrenzten Abschnitte der Motorströme bei maximaler Speisefrequenz zeitlich direkt aufeinander folgen.

2. Schaltungsanordnung nach Anspruch 1, **gekennzeichnet durch** einen Wechselstromgenerator, bestehend aus einer Gleichspannungsquelle (Q), deren Pluspol und deren Minuspol jeweils über einen Schalttransistor (T und T') an ein Ende einer Ständerwicklung (w1) gelegt sind, sowie einem Rechteckimpulsgeber (PG) mit einstellbarer Impulsfrequenz (f), dessen Impulse wechselweise die Schalttransistoren (T, T') über deren Basen auf- und zusteuern,
einen Strombegrenzer, gebildet durch einen den Basisstrom jedes Schalttransistors (T, T') bestimmenden Widerstand (R, R').

## Claims

1. Circuit arrangement for the control of the rotational speed of two-phase induction motors, whose stator windings (W1, W2) are fed with variable-frequency alternating currents (i1, i2) phase-shifted by 90°, with a device (G, P) for generating the two alternating currents,
characterised in that two current limiters (B1, B2) via which the two alternating currents (i1, i2) are fed to the stator windings (W1, W2) are connected to the device (G, P), whereby the current limiters limit the amplitudes of the alternating supply currents in such a way that trapezoidal motor currents are produced, and at maximum supply frequency the portions of the motor currents limited to a constant current intensity immediately follow each other in time sequence.

2. Circuit arrangement according to Claim 1, characterised by an alternating current generator comprising a direct current source (Q) whose positive pole and whose negative pole is connected via a respective switching transistor T and T' to one end of a stator winding w1,
as well as a squarewave pulse generator (PG) with adjustable pulse frequency (f), whose pulses alternately turn the switching transistors (T, T') on and off via their bases, and

a current limiter formed by a resistor (R, R′) determining the base current of each switching transistor (T, T′).

## Revendications

1. Montage pour la commande de la vitesse de rotation de moteurs à induction biphasés, dont les enroulements statoriques (W1,W2) sont alimentés par deux courants alternatifs (i1,i2), déphasés de 90° et à fréquence variable, comportant un dispositif (G,P) destiné à produire les deux courants alternatifs, caractérisé par le fait qu'au dispositif (G,P) destiné à produire les courants alternatifs sont raccordés deux limiteurs de courant (B1,B2), par lesquels les deux courants alternatifs (i1,i2) sont envoyés aux enroulements statoriques (W1,W2), les limiteurs de courant provoquant une limitation des amplitudes des courants alternatifs d'alimentation de manière à produire des courants de forme trapézoïdale du moteur et de manière à faire se succèder directement dans le temps pour une fréquence d'alimentation maximale les parties des courants du moteur, qui sont limitées à une intensité de courant constante.

2. Montage suivant la revendication 1, caractérisé par un générateur de courant alternatif, constitué d'une source de tension continue (Q), dont le pôle positif et le pôle négatif sont raccordés par l'intermédiaire de transistors respectifs de commutation (T et T′) à une extrémité d'un enroulement statorique (w1), ainsi qu'un générateur d'impulsions rectangulaires (PG) à fréquence d'impulsions (f) réglable, dont les impulsions placent alternativement à l'état conducteur et à l'état bloqué les transistors de commutation (T, T′) par l'intermédiaire de leurs bases, et

   d'un limiteur de courant, formé par une résistance (R,R′), qui détermine le courant de base de chaque transistor de commutation (T,T′).

## FIG 1

## FIG 2

# FIG 3

# FIG 4

# FIG 5

# FIG 6